# EUROPEAN PATENT APPLICATION

(11) **EP 3 936 374 A1**
(43) Date of publication of application: **12.01.2022**
(21) Application number: 20185210.0
(22) Date of filing: 10.07.2020
(51) Int. Cl.: B60L 53/12, B60L 53/14, B60W 40/04

(54) **A VEHICLE SYSTEM FOR A SUBJECT VEHICLE DRIVING IN A VEHICLE FORMATION WITH AT LEAST ONE LEAD VEHICLE**

(71) Applicant: VOLVO TRUCK CORPORATION, 405 08 Göteborg (SE)
(72) Inventor: SJUNNESSON, Emil, 418 72 Göteborg (SE); KHAJEHEIAN, Bahareh, 422 49 Hisings Backa (SE); ÖHMAN, Mikaela, 414 81 Göteborg (SE); HALONEN, Matti, 417 28 Göteborg (SE)
(74) Representative: Valea AB

(57) **Abstract**

The invention relates to a vehicle system (100) for a subject vehicle (1) driving in a vehicle formation (VF) with at least one lead vehicle (200), comprising:
- an energy system (10) configured to transfer energy between the subject vehicle (1) and another vehicle (200) during driving in the vehicle formation (VF);
wherein the vehicle system (100) further comprises:
- an information obtaining system (20) configured to obtain information indicative of a driving situation in front of the lead vehicle (200) during driving in the vehicle formation (VF); and
wherein the vehicle system (100) is configured to:
- terminate transfer of energy or inhibit initiation of transfer of energy if the information obtaining system (20) obtains information indicative of a hazardous driving situation in front of the lead vehicle (200). The invention also relates to a method, at least one control, a subject vehicle and a vehicle formation.

## Description

### TECHNICAL FIELD

The invention relates to a vehicle system for a subject vehicle driving in a vehicle formation with at least one lead vehicle. The invention also relates to a method for controlling energy transfer between a subject vehicle and another vehicle driving in a vehicle formation with at least one lead vehicle. The invention further relates to at least one control unit, to a subject vehicle and to a vehicle formation comprising the subject vehicle.

The invention can be applied in heavy-duty vehicles, such as trucks, buses and construction equipment. Although the invention mainly will be described with respect to platooning of trucks, the invention is not restricted to this particular vehicle, but may also be used in other vehicles such as buses, working machines, passenger cars etc. The invention is also applicable to vehicles in the form of marine vessels.

### BACKGROUND

Vehicles may be driven in a vehicle formation, such as during highway driving. For example, it is known to drive in so called vehicle platoons, whereby one or more follower vehicles are guided by a lead vehicle in front of the follower vehicles during travelling.

Vehicle formation driving, or platooning, or vehicle fleet driving, has a number of known benefits. This includes short distance following, implying reduced energy consumption for the platoon and reduced used space when e.g. driving on the highway. In addition, vehicle formation driving may allow drivers of the follower vehicles to not take part in the driving.

Vehicle formation driving may also open up for the possibility to transfer energy between the vehicles of the vehicle formation. For example, an at least partly electrical vehicle of the vehicle formation may be configured to transfer electrical energy to another at least partly electrical vehicle of the vehicle formation. Thereby, available energy may e.g. be transferred from a vehicle which has surplus energy to another vehicle or to other vehicles which currently is/are lacking energy.

Even though it is known for vehicles to drive, or travel, in a vehicle formation, there is still a strive to develop technology which provides further improved and safer vehicle formation driving.

### SUMMARY

An object of the invention is to provide an improved vehicle system for a subject vehicle driving in a vehicle formation with at least one lead vehicle, in which especially driving safety is improved. Another object of the invention is to provide an improved method for a subject vehicle for controlling energy transfer between the subject vehicle and another vehicle driving in a vehicle formation with at least one lead vehicle, in which especially driving safety is improved. Another object of the invention is to provide at least one control unit, an improved subject vehicle and/or an improved vehicle formation comprising the subject vehicle.

According to a first aspect of the invention, the object is achieved by a vehicle system according to claim 1. According to a second aspect of the invention, the object is achieved by a method according to claim 11. According to a third aspect, the object is achieved by at least one control unit according to claim 15. According to a fourth aspect, the object is achieved by a subject vehicle according to claim 16. According to a fifth aspect, the object is achieved by a vehicle formation according to claim 17.

According to the first aspect of the invention, the object is achieved by a vehicle system for a subject vehicle driving in a vehicle formation with at least one lead vehicle, comprising:
- an energy system configured to transfer energy between the subject vehicle and another vehicle during driving in the vehicle formation;
wherein the vehicle system further comprises:
- an information obtaining system configured to obtain information indicative of a driving situation in front of the lead vehicle during driving in the vehicle formation; and
wherein the vehicle system is configured to:
- terminate transfer of energy or inhibit initiation of transfer of energy if the information obtaining system obtains information indicative of a hazardous driving situation in front of the lead vehicle.

The subject vehicle as mentioned herein may be any vehicle of the vehicle formation, including any one of one or more follower vehicles, i.e. vehicles which are following the lead vehicle. The subject vehicle may also be the lead vehicle. The other vehicle to/from which energy is transferred is preferably a vehicle of the vehicle formation. The lead vehicle is herein defined as the vehicle of the vehicle formation which is in the front of the vehicle formation, as seen in a travelling direction of the vehicle formation.

A vehicle formation, also referred to as a vehicle platoon or a fleet of vehicles, is defined as a group of two or more vehicles which are travelling in a formation, e.g. in a successive order one after the other. The vehicle formation may be manually controlled by one or more users and/or it may be automatically controlled.

By the provision of the vehicle system as disclosed herein, improved and safer travelling of the subject vehicle and/or of the vehicle formation is achieved while, before and/or after energy is/has been transferred between the subject vehicle and the other vehicle. In fact, it has been realized that energy transfer, which in itself provides a number of benefits, between vehicles in the vehicle formation should be carried out in a safe manner. For example, uncontrolled termination of energy transfer due to a sudden evasive manoeuvre of one of the vehicles may damage the energy system, which also may be mechanical components of the energy system. As another example, transferring of energy may lead to a reduced manoeuvring capability, and thereby it may be beneficial to avoid energy transfer in hazardous driving situations. As such, by configuring the vehicle system so that transfer of energy is terminated and/or so that initiation of transfer of energy is inhibited if information indicative of a hazardous driving situation in front of the lead vehicle is obtained, a safer and improved travelling is achieved. In addition, by not allowing transfer of energy if there is a hazardous driving situation in front of the lead vehicle, the risk of damaging the energy system may be reduced or mitigated. The vehicle system being configured to terminate transfer of energy means that the vehicle system is configured to terminate energy transfer in a controlled manner. A controlled manner is herein defined as avoiding damaging the energy system and/or avoiding other driving related risks, such as avoiding collisions, rapid braking etc.

The information indicative of a driving situation in front of the lead vehicle during driving in the vehicle formation may be any type of information, including but not limited to a signal purely giving an instruction to terminate transfer of energy. Additionally or alternatively, the information may comprise sensor information, or any other information as e.g. mentioned herein, which information comprises information about the driving situation in front of the lead vehicle. Accordingly, the intelligence of determining if a driving situation in front of the lead vehicle is a hazardous driving situation in which energy transfer should be avoided may be performed by the vehicle system itself, by a combination of the vehicle system and any other system, or even by another system which is not the vehicle system. Such other system may for example be a system of another vehicle in the vehicle formation and/or another remote system not forming part of any vehicle in the vehicle formation.

Optionally, the vehicle system may further comprise a vehicle formation driving system configured to guide the subject vehicle and/or another vehicle in the vehicle formation. For example, the vehicle formation driving system may be a system for the subject vehicle to follow, i.e. be guided by, another vehicle and/or to guide another vehicle of the vehicle formation. The vehicle formation driving system may for example comprise one or more perception sensors for determining position, velocity, travelling direction etc. of a neighbouring vehicle of the vehicle formation. The vehicle formation driving system may further comprise a vehicle formation driving system communication means, such as a vehicle to vehicle (V2V) communication means, for communicating with at least one other vehicle of the vehicle formation. Such communication may comprise guiding instructions, which are provided from and/or received by the subject vehicle. The vehicle formation driving system communication means may also be used for communicating with any other system not forming part of the vehicle formation, wherefrom e.g. guiding instructions may be received.

Optionally, the vehicle formation driving system may further be configured to terminate guiding of the subject vehicle and/or of the other vehicle if the information obtaining system obtains information indicative of the hazardous driving situation in front of the lead vehicle. For example, if the hazardous driving situation also implies that continued guiding would be a safety risk, the guiding may also be terminated. Thereby, further improved safety during travelling of the vehicle formation may be achieved. Still optionally, the hazardous driving situation in front of the lead vehicle may need to fulfil different criterions for when energy transfer should not be allowed and for when guiding should not be allowed. For example, transfer of energy may be disallowed in more situations and guiding may only be disallowed in more dangerous situations. Thereby guiding may be continued even if it is determined that the hazardous driving situation in front of the lead vehicle implies that energy transfer should be avoided. As such, a more versatile system may be provided, in which different criterions are applied for deciding when energy transfer and guiding should be allowed/disallowed.

Optionally, the information obtaining system may be configured to obtain information from a forward looking perception sensor of the lead vehicle. The information may be directly transferred to the information obtaining system or it may be indirectly transferred to the information obtaining system, whereby the information may be adapted and/or analysed in another intermediate information obtaining system. The forward looking perception sensor of the lead vehicle may be any one of the following perception sensors: camera, LIDAR (light detection and ranging), RADAR (radio detection and ranging), SONAR (sound navigation ranging) or the like.

Optionally, the information obtaining system may comprise a vehicle to vehicle (V2V) communication device which is configured to obtain information from the lead vehicle and/or to provide information to another vehicle. The information may be directly or indirectly obtained from the lead vehicle, and/or the information may be directly or indirectly provided to the other vehicle, which is preferably another vehicle of the vehicle formation. Still optionally, the V2V communication device may be any one of a wireless and a wired communication device. Such communication devices are known by the skilled person and will therefore not be described more in detail herein. The V2V communication device may be a separate device or it may be part of the aforementioned vehicle formation driving system communication means. For example, the vehicle system may comprise a V2V communication device which is adapted to provide and/or receive a plurality of different types of information, such as the aforementioned guiding instructions and information indicative of the hazardous driving situation.

Optionally, the information obtaining system may be configured to obtain information from an information system outside of the vehicle formation. For example, the information system outside of the vehicle formation may be a remote system, such as a system comprising one or more antennas close to a road section for communicating with at least one vehicle of the vehicle formation. The information system outside of the vehicle formation may also use other communication means for communicating with at least one vehicle of the vehicle formation. An example of such other communication means is telecommunication by use of mobile antennas. Accordingly, the information system outside of the vehicle may provide information indicative of the hazardous driving situation in front of the lead vehicle.

Optionally, the energy system may be an electric energy system. Thereby, transfer of energy means transfer of electrical energy. Transfer of energy may for example be performed by charging/discharging one or more batteries. The provided electrical energy may be accumulated energy in e.g. a battery and/or it may be energy generated by e.g. a generator. The received electrical energy may be accumulated in a battery, i.e. by charging the battery, and/or it may be directly used for driving an electric motor. For example, a controlled termination of energy may be carried out by disconnecting at least one contactor for an energy source, e.g. a battery, of the electric energy system. Still optionally, a controlled termination of energy may be carried out by requesting a reduction of current and/or voltage before the at least one contactor is disconnected.

Optionally, the electric energy system may comprise any one of an inductive charging device and a conductive charging device configured to transfer energy between the subject vehicle and the other vehicle during driving in the vehicle formation. Still optionally, the conductive and/or inductive charging device may be in the form of an arm which also may be selectively positioned in at least a first energy transfer position and in a rest position when energy is not to be transferred.

Still optionally, when using a conductive charging device, the vehicle system may further be configured to:
- disconnect a mechanical connection between the conductive charging device and the other vehicle if the information obtaining system obtains information indicative of the hazardous driving situation in front of the lead vehicle. Thereby the subject vehicle may be completely decoupled from the other vehicle, implying increased safety and a reduced risk of damage to the electric energy system. Preferably, the conductive charging device is disconnected after the energy transfer has been terminated. Accordingly, two steps may be carried out in successive order, i.e. first terminating energy transfer followed by disconnecting the conductive charging device. As such, a more controlled termination of energy will be achieved. Still optionally, the hazardous driving situation in front of the lead vehicle may need to fulfil different criterions for when the termination of energy and the disconnection of the conductive charging device should be performed. For example, the conductive charging device may be disconnected in more dangerous situations, implying further improved safety.

Optionally, the vehicle system may further be configured to disconnect any other mechanical connection between the subject vehicle and the other vehicle if the information obtaining system obtains information indicative of the hazardous driving situation in front of the lead vehicle. Such other mechanical connection may for example be a mechanical connection for wired transfer of information between the vehicles.

Optionally, the energy system may be configured to transfer energy in fluid and/or gas form. For example, energy may be in the form of gasoline, diesel, natural gas, or any other energy source for a vehicle.

The expression "*hazardous driving situation in front of the lead vehicle*" as used herein means a situation which is, or could be, hazardous for the vehicle formation. This includes but is not limited to an unexpected obstacle on the road ahead of the lead vehicle. As such, and optionally, the hazardous driving situation in front of the lead vehicle may correspond to any one of the following driving situations:
an obstacle in front of the lead vehicle;
a downgraded road condition, such as a slippery road;
a traffic jam in front of the lead vehicle; or
any other driving situation which may be hazardous when energy is transferred.

Optionally, the vehicle system may further be configured to initiate transfer of energy if the information indicative of the driving situation in front of the lead vehicle indicates that there is no hazardous driving situation in front of the lead vehicle any longer. Thereby, the vehicle system may initiate transfer of energy again after the hazardous driving situation has passed.

According to the second aspect of the invention, the object is achieved by a method for controlling energy transfer between a subject vehicle and another vehicle driving in a vehicle formation with at least one lead vehicle, wherein the subject vehicle comprises a vehicle system comprising an energy system and an information obtaining system. The method comprises:
- transferring energy between the subject vehicle and the other vehicle during driving in the vehicle formation or planning to initiate transfer of energy between the subject vehicle and the other vehicle during driving in the vehicle formation;
- obtaining information indicative of a driving situation in front of the lead vehicle during driving in the vehicle formation; and
- terminating transferring of energy or inhibiting initiation of transfer of energy if the obtained information is indicative of a hazardous driving situation in front of the lead vehicle.

Advantages and effects of the second aspect of the invention are similar to the advantages and effects with respect to the first aspect of the invention. It shall also be noted that all embodiments of the first aspect of the invention are applicable to and combinable with all embodiments of the second aspect of the invention and vice versa.

Optionally, the vehicle system may further comprise a vehicle formation driving system, and the method further comprises guiding the subject vehicle and/or another vehicle in the vehicle formation. Accordingly, the guiding is carried out by use of the vehicle formation driving system.

Still optionally, the method may further comprise terminating guiding of the subject vehicle and/or of the other vehicle if the information obtaining system obtains information indicative of the hazardous driving situation in front of the lead vehicle. Still optionally, the hazardous driving situation in front of the lead vehicle may need to fulfil different criterions for when energy transfer should not be allowed and for when guiding should not be allowed. As such, the method may further comprise selectively allowing and disallowing energy transfer and guiding in dependence on the different criterions for when energy transfer should not be allowed and for when guiding should not be allowed.

Optionally, the method may further comprise initiating transfer of energy if the information indicative of the driving situation in front of the lead vehicle indicates that there is no hazardous driving situation in front of the lead vehicle any longer. Thereby, the vehicle system may initiate transfer of energy again after the hazardous driving situation has passed.

Optionally, the method may further comprise disconnecting a mechanical connection between the conductive charging device and the other vehicle if the information obtaining system obtains information indicative of a hazardous driving situation in front of the lead vehicle.

According to the third aspect of the invention, the object is achieved by at least one control unit for a subject vehicle configured to perform the method of any one of the embodiments of the second aspect. The step of transferring energy may thus be performed by the at least one control unit issuing a signal to transfer energy. The step of terminating transferring of energy or inhibiting initiation of transfer of energy may thus be performed by issuing a signal to terminate transfer of energy or inhibit initiation of transfer of energy. The signal(s) may for example be received by an actuator which performs an action so that energy transfer is terminated or initiated. The actuator may for example be at least one contactor for disconnecting a connection to a battery of the electric energy system and/or an actuator for moving the arm as mentioned herein. For example, a controlled termination of energy transfer may be performed by first disconnecting the at least one contactor followed by moving the arm to its rest position. Still optionally, in the case when the energy system is an electric energy system, the at least one control unit may also be configured to request a reduction of current and/or voltage from the energy source, e.g. battery, before the at least one contactor is disconnected. Thereby the risk of arc discharge can be reduced, implying a further controlled termination of energy transfer.

Optionally, the at least one control unit may form part of the vehicle system as disclosed herein.

The at least one control unit may include a microprocessor, microcontroller, programmable digital signal processor or another programmable device. The at least one control unit may also, or instead, include an application specific integrated circuit, a programmable gate array or programmable array logic, a programmable logic device, or a digital signal processor. Where the at least one control unit includes a programmable device such as the microprocessor, microcontroller or programmable digital signal processor mentioned above, the processor may further include computer executable code that controls operation of the programmable device. The at least one control unit may comprise embedded hardware, sometimes with integrated software. Examples of physical relationships are: shared casing and components mounted on one or several circuit boards.

According to the fourth aspect of the invention, the object is achieved by a subject vehicle comprising a vehicle system according to any one of the embodiments of the first aspect of the invention and/or at least one control unit according to any one of the embodiments of the third aspect of the invention.

According to the fifth aspect of the invention, the object is achieved by a vehicle formation comprising the subject vehicle according to any one of the embodiments of the fourth aspect and a lead vehicle and/or at least one follower vehicle.

According to a sixth aspect of the invention, the object may also be achieved by a computer program comprising program code means for performing the steps of any of the embodiments of the second aspect of the invention when said program is run on the at least one control unit according to the third aspect of the invention.

According to a seventh aspect of the invention, the object may also be achieved by a computer readable medium carrying a computer program comprising program code means for performing the steps of any of the embodiments of the second aspect of the invention when said program product is run on the at least one control unit according to the third aspect of the invention.

Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.

In the drawings:
Fig. 1 is a side view of a subject vehicle according to an example embodiment of the present invention,
Fig. 2 is a schematic view from above of a vehicle formation according to an example embodiment of the present invention,
Fig. 3 is a schematic view of a vehicle system according to an example embodiment of the present invention, and
Fig. 4 is a flowchart of a method according to an example embodiment of the present invention.

The drawings are schematic and not drawn to scale.

### DETAILED DESCRIPTION OF EXAMPLE EMBODIMENTS OF THE INVENTION

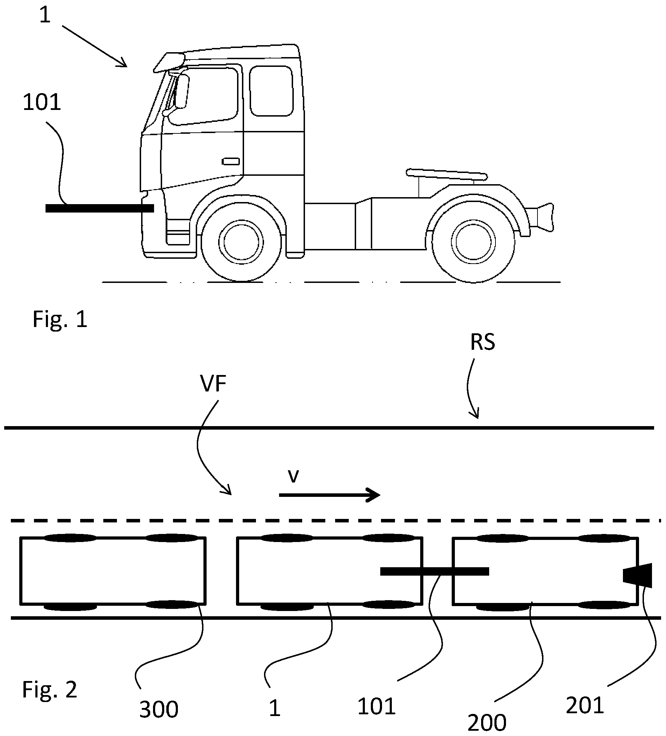

Fig. 1 shows a side view of a subject vehicle 1 according to an embodiment of the present invention. The vehicle 1 is here an at least partly electrical truck, i.e. a truck which is at least partly driven and propelled by use of electrical power. However, as mentioned in the above, the subject vehicle 1 may also be any other kind of vehicle, and also it may not only be an at least partly electrical vehicle. For example, the subject vehicle 1 may be a bus, another type of truck, a working machine, a passenger car and a vessel in the form of a marine vessel. According to a preferred embodiment, the vehicle is a road vehicle intended to drive on a public road.

The subject vehicle 1 comprises a conductive charging device 101 in the form of an arm which is pivotable between a charging/discharging position and a rest position. The arm 101 as shown is in its charging/discharging position where energy, in this case electrical energy, can be transferred to/from another vehicle (not shown).

In fig. 2, a vehicle formation VF from above is shown which comprises the subject vehicle 1 as e.g. shown in fig. 1 and a lead vehicle 200 when driving in a vehicle platoon, i.e. platooning, on a road section RS. The vehicle formation VF thus comprises one lead vehicle 200 in the front of the vehicle formation VF, as seen in a travelling direction v. The vehicle formation VF further comprises one more vehicle 300 which is following the subject vehicle 1. The vehicle formation VF is controlled, e.g. automatically controlled, such that short distance following between the vehicles is permitted. At least the subject vehicle 1 and the one more vehicle 300 are guided with respect to the vehicle in front thereof, respectively. This may for example be carried out by use of one or more perception sensors of each vehicle (not shown) and/or by V2V communication.

Moreover, in the example shown in fig. 2, energy is transferred between the subject vehicle 1 and the lead vehicle 200, by use of the aforementioned arm 101. It shall however be understood that energy may be transferred between any pair of vehicles of the vehicle formation VF. Energy may also be transferred between more than two vehicles, such as between all of the vehicles in the vehicle formation VF. As such, more than one vehicle of the vehicle formation VF may be configured as the subject vehicle 1. In addition, if energy is transferred between more than two vehicles, the more than two vehicles may comprise similar types of energy systems or different types of energy systems. For example, each vehicle's energy system may comprise a conductive charging device or the more than two vehicles may have different types of charging devices.

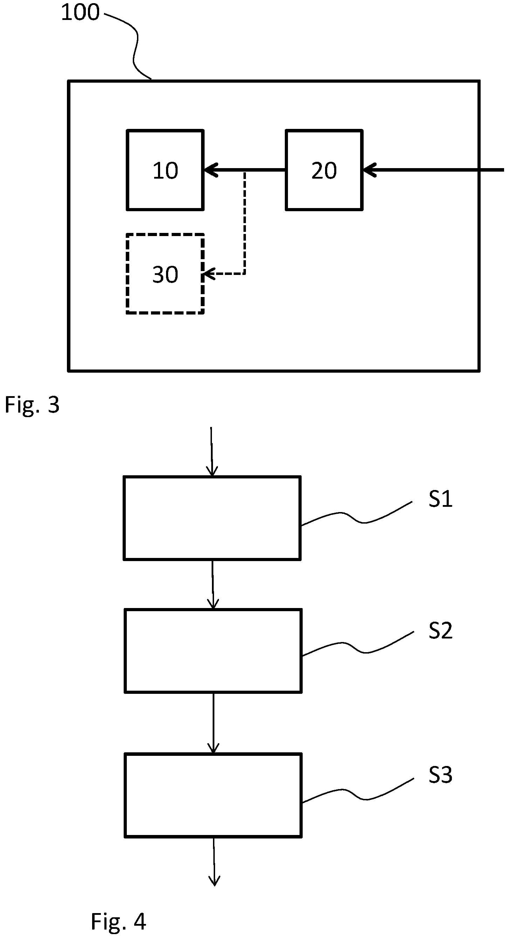

With respect to especially fig. 3, a vehicle system 100 for the subject vehicle 1 will be described. The vehicle system 100 comprises an energy system 10 configured to transfer energy between the subject vehicle 1 and another vehicle 200 during driving in the vehicle formation VF. As stated hereinabove, the other vehicle is here the lead vehicle 200, even though it may be any other vehicle of the vehicle formation VF. The energy system 10 may for example be an electrical system comprising e.g. an electric motor/generator (not shown), an energy storage means (not shown), such as a battery, and a charging/discharging device (not shown) comprising the arm 101 as shown in figs. 1 and 2.

The vehicle system 100 further comprises an information obtaining system 20 configured to obtain information indicative of a driving situation in front of the lead vehicle 200 during driving in the vehicle formation VF. The information obtaining system 20 may for example communicate with the lead vehicle 200 and any other vehicle by use of wireless V2V communication means or by wired communication, such as via the arm 101. Wireless communication may for example be carried out by use of Wifi, Bluetooth, cellular communication (3g, 4g, 5g) etc. The information obtaining system 20 may also, or alternatively, communicate with an information system (not shown) outside of the vehicle formation VF.

The vehicle system 100 is configured to terminate transfer of energy or inhibit initiation of transfer of energy if the information obtaining system 20 obtains information indicative of a hazardous driving situation in front of the lead vehicle 200. The hazardous driving situation in front of the lead vehicle 200 may for example be detected by use of a forward looking perception sensor 201 of the lead vehicle 200, see fig. 2. Thereby, the vehicle system 100 will disallow transfer of energy if a hazardous driving situation in front of the lead vehicle 200 is detected by the forward looking perception sensor 201. As a consequence, an improved vehicle system 100 is achieved which will provide a safer travelling of the vehicle formation VF and also the risk of damaging the energy system 10 will be reduced.

The vehicle system 100 may further comprise a vehicle formation driving system 30 (represented by a box with dashed lines) configured to guide the subject vehicle 1 and/or another vehicle, which may be the one more vehicle 300, in the vehicle formation VF.

The vehicle formation driving system 30 may further be configured to terminate guiding of the subject vehicle 1 and/or of the other vehicle if the information obtaining system 20 obtains information indicative of the hazardous driving situation in front of the lead vehicle 200.

As mentioned in the above, the hazardous driving situation in front of the lead vehicle 200 may correspond to any one of the following driving situations:
an obstacle (not shown) in front of the lead vehicle 200;
a downgraded road condition, such as a slippery road;
a traffic jam (not shown) in front of the lead vehicle 200; or
any other driving situation which may be hazardous when energy is transferred.

The expression "*hazardous when energy is transferred*" may for example be defined as a situation in which driving safety may be compromised and/or a situation in which the risk of damaging the energy system 10 is considered to be high.

Still optionally, when using a conductive charging device as e.g. the arm 101 as shown in figs. 1 and 2, the vehicle system 100 may further be configured to:
- disconnect a mechanical connection between the conductive charging device 101 and the other vehicle 200 if the information obtaining system 20 obtains information indicative of the hazardous driving situation in front of the lead vehicle 200. Thereby the subject vehicle 1 may be completely decoupled from the other vehicle 200, implying increased safety and a reduced risk of damage of the electric energy system 10. Preferably, the conductive charging device 101 is disconnected after the energy transfer has been terminated.

Fig. 4 shows a flowchart of an example embodiment of the second aspect of the present invention. The method is a method for controlling energy transfer between a subject vehicle 1 and another vehicle 200 driving in a vehicle formation VF with at least one lead vehicle 200, wherein the subject vehicle 1 comprises a vehicle system 100 comprising an energy system 10 and an information obtaining system 20. The method comprises:
S1) transferring energy between the subject vehicle 1 and the other vehicle 200 during driving in the vehicle formation VF or planning to initiate transfer of energy between the subject vehicle 1 and the other vehicle 200 during driving in the vehicle formation VF;
S2) obtaining S2 information indicative of a driving situation in front of the lead vehicle 200 during driving in the vehicle formation VF; and
S3) terminating transferring of energy or inhibiting initiation of transfer of energy if the obtained information is indicative of a hazardous driving situation in front of the lead vehicle 200.

As mentioned in the above, the method may be carried out by at least one control unit (not shown) of the subject vehicle 1.

The method may further comprise guiding the subject vehicle 1 and/or another vehicle in the vehicle formation VF, by use of the vehicle formation driving system 30 as shown in fig. 3. The method may further comprise terminating guiding of the subject vehicle 1 and/or of the other vehicle if the information obtaining system 20 obtains information indicative of the hazardous driving situation in front of the lead vehicle 200.

The method may further comprise disconnecting a mechanical connection between the conductive charging device 101 and the other vehicle 200 if the information obtaining system 20 obtains information indicative of a hazardous driving situation in front of the lead vehicle 200.

It is to be understood that the present invention is not limited to the embodiments described above and illustrated in the drawings; rather, the skilled person will recognize that many changes and modifications may be made within the scope of the appended claims.

## Claims

1. A vehicle system (100) for a subject vehicle (1) driving in a vehicle formation (VF) with at least one lead vehicle (200), comprising:
- an energy system (10) configured to transfer energy between the subject vehicle (1) and another vehicle (200) during driving in the vehicle formation (VF);
wherein the vehicle system (100) further comprises:
- an information obtaining system (20) configured to obtain information indicative of a driving situation in front of the lead vehicle (200) during driving in the vehicle formation (VF); and
wherein the vehicle system (100) is configured to:
- terminate transfer of energy or inhibit initiation of transfer of energy if the information obtaining system (20) obtains information indicative of a hazardous driving situation in front of the lead vehicle (200).

2. The vehicle system (100) according to claim 1, further comprising a vehicle formation driving system (30) configured to guide the subject vehicle (1) and/or another vehicle in the vehicle formation (VF).

3. The vehicle system (100) according to claim 2, wherein the vehicle formation driving system (30) is further configured to terminate guiding of the subject vehicle(1) and/or of the other vehicle if the information obtaining system (20) obtains information indicative of the hazardous driving situation in front of the lead vehicle (200).

4. The vehicle system (100) according to any one of the preceding claims, wherein the information obtaining system (20) is configured to obtain information from a forward looking perception sensor (201) of the lead vehicle (200).

5. The vehicle system (100) according to any one of the preceding claims, wherein the information obtaining system (20) comprises a vehicle to vehicle (V2V) communication device which is configured to obtain information from the lead vehicle (200) and/or to provide information to another vehicle.

6. The vehicle system (100) according to claim 5, wherein the vehicle to vehicle (V2V) communication device is any one of a wireless and a wired communication device.

7. The vehicle system (100) according to any one of the preceding claims, wherein the information obtaining system (20) is configured to obtain information from an information system outside of the vehicle formation (VF).

8. The vehicle system (100) according to any one of the preceding claims, wherein the energy system (10) is an electric energy system.

9. The vehicle system (100) according to claim 8, wherein the electric energy system comprises any one of an inductive charging device and a conductive charging device (101) configured to transfer energy between the subject vehicle (1) and the other vehicle (200) during driving in the vehicle formation (VF).

10. The vehicle system (100) according to any one of the preceding claims, wherein the hazardous driving situation in front of the lead vehicle (200) corresponds to any one of the following driving situations:
an obstacle in front of the lead vehicle (200);
a downgraded road condition, such as a slippery road;
a traffic jam in front of the lead vehicle (200); or
any other driving situation which may be hazardous when energy is transferred.

11. A method for controlling energy transfer between a subject vehicle (1) and another vehicle (200) driving in a vehicle formation (VF) with at least one lead vehicle (200), wherein the subject vehicle (1) comprises a vehicle system (100) comprising an energy system (10) and an information obtaining system (20), the method comprising:
- transferring (S1) energy between the subject vehicle (1) and the other vehicle (200) during driving in the vehicle formation (VF) or planning to initiate transfer of energy between the subject vehicle (1) and the other vehicle (200) during driving in the vehicle formation (VF);
- obtaining (S2) information indicative of a driving situation in front of the lead vehicle (200) during driving in the vehicle formation (VF); and
- terminating (S3) transferring of energy or inhibiting initiation of transfer of energy if the obtained information is indicative of a hazardous driving situation in front of the lead vehicle (200).

12. The method according to claim 11, wherein the vehicle system (100) further comprises a vehicle formation driving system (30), and the method further comprises guiding the subject vehicle (1) and/or another vehicle in the vehicle formation (VF).

13. The method according to claim 12, further comprising terminating guiding of the subject vehicle (1) and/or of the other vehicle if the information obtaining system (20) obtains information indicative of the hazardous driving situation in front of the lead vehicle (200).

14. The method according to any one of claims 11-13, wherein the hazardous driving situation in front of the lead vehicle (200) corresponds to any one of the following driving situations:
an obstacle in front of the lead vehicle (200);
a downgraded road condition, such as a slippery road;
a traffic jam in front of the lead vehicle (200); or
any other driving situation which may be hazardous when energy is transferred.

15. At least one control unit for a subject vehicle (1) configured to perform the method of any one of claims 11-14.

16. A subject vehicle (1) comprising a vehicle system (100) according to any one of claims 1-10 and/or at least one control unit according to claim 15.

17. A vehicle formation (VF) comprising the subject vehicle (1) according to claim 16 and a lead vehicle (200) and/or at least one follower vehicle.
